(19) Europäisches Patentamt / European Patent Office / Office européen des brevets

(11) **EP 4 554 218 A1**

(12) **EUROPEAN PATENT APPLICATION**
published in accordance with Art. 153(4) EPC

(43) Date of publication:
14.05.2025 Bulletin 2025/20

(21) Application number: 23835757.8

(22) Date of filing: 30.06.2023

(51) International Patent Classification (IPC):
H04N 19/513 (2014.01)    H04N 19/186 (2014.01)
H04N 19/105 (2014.01)    H04N 19/70 (2014.01)
H04N 19/109 (2014.01)

(52) Cooperative Patent Classification (CPC):
H04N 19/105; H04N 19/109; H04N 19/186;
H04N 19/513; H04N 19/70

(86) International application number:
PCT/KR2023/009192

(87) International publication number:
WO 2024/010291 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.07.2022 KR 20220082579

(71) Applicant: LG Electronics Inc.
Yeongdeungpo-gu
Seoul 07336 (KR)

(72) Inventors:
• NAM, Jung Hak
Seoul 06772 (KR)
• LIM, Jaehyun
Seoul 06772 (KR)
• PARK, Nae Ri
Seoul 06772 (KR)
• JANG, Hyeong Moon
Seoul 06772 (KR)

(74) Representative: Maikowski & Ninnemann
Patentanwälte Partnerschaft mbB
Postfach 15 09 20
10671 Berlin (DE)

(54) **ILLUMINATION COMPENSATION-BASED IMAGE ENCODING/DECODING METHOD AND APPARATUS, AND RECORDING MEDIUM STORING BITSTREAM**

(57)    An image encoding/decoding method and apparatus are provided. An image decoding method performed by an image decoding apparatus may comprise obtaining information about illumination compensation of a current block, deriving illumination compensation parameters for each of two or more illumination compensation candidate modes for the illumination compensation, obtaining an illumination-compensated first adjacent area by applying illumination compensation to a predetermined first adjacent area adjacent to a reference block of the current block based on the illumination compensation parameters, obtaining a final error value for each of the illumination compensation candidate modes based on an error between a sample value in the illumination-compensated first adjacent area and a sample value in a predetermined second adjacent area adjacent to the current block, reordering the illumination compensation candidate modes based on the final error value, and determining an illumination compensation candidate mode for the current block based on the reordered illumination compensation candidate modes and the information about illumination compensation. The first adjacent area and the second adjacent area may be at corresponding locations.

EP 4 554 218 A1

FIG. 16

```
                    ( START )

                        |                       S1610
                        ↓
  ┌──────────────────────────────────────────┐
  │    ENCODE INFORMATION ABOUT ILLUMINATION  │
  │       COMPENSATION OF CURRENT BLOCK        │
  └──────────────────────────────────────────┘
                        |                       S1620
                        ↓
  ┌──────────────────────────────────────────┐
  │     DERIVE ILLUMINATION COMPENSATION      │
  │      PARAMETERS FOR EACH OF TWO OR MORE    │
  │     ILLUMINATION COMPENSATION CANDIDATE    │
  │    MODES FOR ILLUMINATION COMPENSATION     │
  └──────────────────────────────────────────┘
                        |                       S1630
                        ↓
  ┌──────────────────────────────────────────┐
  │      OBTAIN ILLUMINATION-COMPENSATED      │
  │    FIRST ADJACENT AREA BY ILLUMINATION    │
  │        COMPENSATION TO PREDETERMINED       │
  │       FIRST ADJACENT AREA ADJACENT TO      │
  │     REFERENCE BLOCK OF CURRENT BLOCK       │
  └──────────────────────────────────────────┘
                        |                       S1640
                        ↓
  ┌──────────────────────────────────────────┐
  │   CALCULATE FINAL ERROR VALUE FOR EACH OF  │
  │ ILLUMINATION COMPENSATION CANDIDATE MODES  │
  └──────────────────────────────────────────┘
                        |                       S1650
                        ↓
  ┌──────────────────────────────────────────┐
  │           REORDER ILLUMINATION            │
  │      COMPENSATION CANDIDATE MODES         │
  └──────────────────────────────────────────┘
                        |                       S1660
                        ↓
  ┌──────────────────────────────────────────┐
  │   DETERMINE ILLUMINATION COMPENSATION     │
  │      CANDIDATE MODE FOR CURRENT BLOCK      │
  └──────────────────────────────────────────┘
                        |
                        ↓
                     ( END )
```

## Description

### Technical Field

The present disclosure relates to an image encoding/decoding method and apparatus and a recording medium for storing a bitstream and, more particularly, to an image encoding and decoding method and apparatus based on illumination compensation, and a recording medium for storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to provide an image encoding/decoding method and apparatus for performing illumination compensation.

In addition, an object of the present disclosure is to provide an image encoding/decoding method and apparatus that reorders illumination compensation candidates based on template cost when performing illumination compensation.

In addition, an object of the present disclosure is to provide an image encoding/decoding method and apparatus that performs illumination compensation when a prediction mode is a merge mode.

In addition, an object of the present disclosure is to provide a non-transitory computer-readable recording medium for storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus may comprise obtaining information about illumination compensation of a current block, deriving illumination compensation parameters for each of two or more illumination compensation candidate modes for the illumination compensation, obtaining an illumination-compensated first adjacent area by applying illumination compensation to a predetermined first adjacent area adjacent to a reference block of the current block based on the illumination compensation parameters, obtaining a final error value for each of the illumination compensation candidate modes based on an error between a sample value in the illumination-compensated first adjacent area and a sample value in a predetermined second adjacent area adjacent to the current block, reordering the illumination compensation candidate modes based on the final error value, and determining an illumination compensation candidate mode for the current block based on the reordered illumination compensation candidate modes and the information about illumination compensation. The first adjacent area and the second adjacent area may be at corresponding locations.

According to an embodiment of the present disclosure, the information about the illumination compensation may include at least one of information indicating whether illumination compensation is capable of being performed on the current block, information indicating whether illumination compensation is applied to the current block, or an index indicating one of the illumination compensation candidate modes.

According to an embodiment of the present disclosure, the illumination compensation candidate mode may include at least one of a first mode that uses both a left adjacent area and a top adjacent area of the current block and the reference block, a second mode that uses only the left adjacent area of the current block and the reference block, or a third mode that uses only the top adjacent area of the current block and the reference block.

According to an embodiment of the present disclosure, the reordering may mean sorting the final error value in ascending order.

According to an embodiment of the present disclosure, based on a prediction mode of the current block being a merge mode, the information about the illumination compensation may be obtained from information about illumination compensation of a selected merge candidate of the current block.

According to an embodiment of the present disclosure, the information about illumination compensation of the selected merge candidate of the current block may be obtained based on at least one of the size, prediction type, partition type, or transform type of the current block.

According to an embodiment of the present disclosure, the information indicating whether illumination compensation is applied to the current block may be obtained based on a first error value for the illumination compensation candidate mode calculated based on the first adjacent area and the second adjacent area before illumination compensation and the final error value.

According to an embodiment of the present disclosure, obtaining of the information indicating whether the illumination compensation is applied to the current block may be determined further based on a threshold.

According to an embodiment of the present disclosure, obtaining of the information indicating whether the illumination compensation is applied to the current block may be performed by comparing a difference value between the final error value and the first error value with the threshold.

According to an embodiment of the present disclosure, an image encoding method performed by an image encoding apparatus may comprise encoding information about illumination compensation of a current block, deriving illumination compensation parameters for each of two or more illumination compensation candidate modes for the illumination compensation, obtaining an illumination-compensated first adjacent area by applying illumination compensation to a predetermined first adjacent area adjacent to a reference block of the current block based on the illumination compensation parameters for each of the illumination compensation candidate modes, obtaining a final error value for each of the illumination compensation candidate modes based on an error between a sample value in the illumination-compensated first adjacent area and a sample value in a predetermined second adjacent area adjacent to the current block, reordering the illumination compensation candidate modes based on the final error value for each of the illumination compensation candidate modes, and determining an illumination compensation candidate mode for the current block based on the reordered illumination compensation candidate modes and the information about illumination compensation. The first adjacent area and the second adjacent area may be at corresponding locations.

According to an embodiment of the present disclosure, in a method of transmitting a bitstream generated by an image encoding method, the image encoding method may comprise encoding information about illumination compensation of a current block, deriving illumination compensation parameters for each of two or more illumination compensation candidate modes for the illumination compensation, obtaining an illumination-compensated first adjacent area by applying illumination compensation to a predetermined first adjacent area adjacent to a reference block of the current block based on the illumination compensation parameters for each of the illumination compensation candidate modes, obtaining a final error value for each of the illumination compensation candidate modes based on an error between a sample value in the illumination-compensated first adjacent area and a sample value in a predetermined second adjacent area adjacent to the current block, reordering the illumination compensation candidate modes based on the final error value for each of the illumination compensation candidate modes, and determining an illumination compensation candidate mode for the current block based on the reordered illumination compensation candidate modes and the information about illumination compensation. The first adjacent area and the second adjacent area may be at corresponding locations.

**Advantageous Effects**

According to the present disclosure, it is possible to provide an image encoding/decoding method and apparatus with improved encoding/decoding efficiency.

According to the present disclosure, it is possible to provide an image encoding/decoding method and apparatus for performing illumination compensation.

According to the present disclosure, it is possible to provide an image encoding/decoding method and apparatus that reorders illumination compensation candidates based on template cost when performing illumination compensation.

According to the present disclosure, it is possible to provide an image encoding/decoding method and apparatus that performs illumination compensation when a prediction mode is a merge mode.

Also, according to the present disclosure, it is possible to provide a non-transitory computer-readable recording medium for storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically illustrating a video coding system, to which an embodiment of the present disclosure is applicable.

FIG. 2 is a view schematically illustrating an image encoding apparatus, to which an embodiment of the present disclosure is applicable.

FIG. 3 is a view schematically illustrating an image decoding apparatus, to which an embodiment of the present disclosure is applicable.

FIG. 4 is a diagram schematically showing an inter prediction unit of an image encoding apparatus.

FIG. 5 is a flowchart illustrating a method of encoding an image based on inter prediction.

FIG. 6 is a diagram schematically showing an inter prediction unit of an image decoding apparatus.

FIG. 7 is a flowchart illustrating a method of decoding an image based on inter prediction.

FIG. 8 is a flowchart illustrating an inter prediction method.

FIG. 9 is a flowchart illustrating an image encoding method according to an embodiment of the present disclosure.

FIG. 10 is a flowchart illustrating an image decoding method according to an embodiment of the present disclosure.

FIG. 11 is a diagram showing the locations of sample lines within a reference area for deriving illumination compensation parameters according to an embodiment of the present disclosure.

FIG. 12 is a diagram illustrating an illumination compensation candidate mode according to an embodiment of the present disclosure.

FIG. 13 is a flowchart illustrating a method for reordering illumination compensation candidate modes according to an embodiment of the present disclosure.

FIG. 14 is a diagram showing template locations for template cost calculation according to an embodiment of the present disclosure.

FIG. 15 is a flowchart illustrating a method of applying adaptive illumination compensation according to an embodiment of the present disclosure.

FIG. 16 is a flowchart illustrating an illumination compensation list reordering method in an image encoding apparatus according to an embodiment of the present disclosure

FIG. 17 is a flowchart illustrating an illumination compensation list reordering method in an image decoding apparatus according to an embodiment of the present disclosure.

FIG. 18 is a view illustrating a content streaming system, to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated.

Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

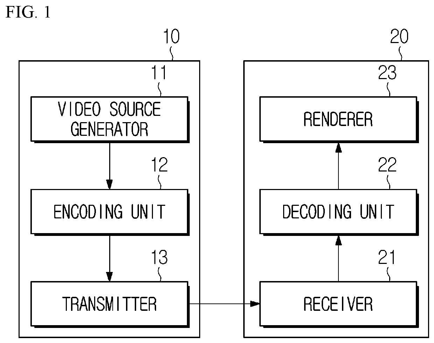

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 120, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

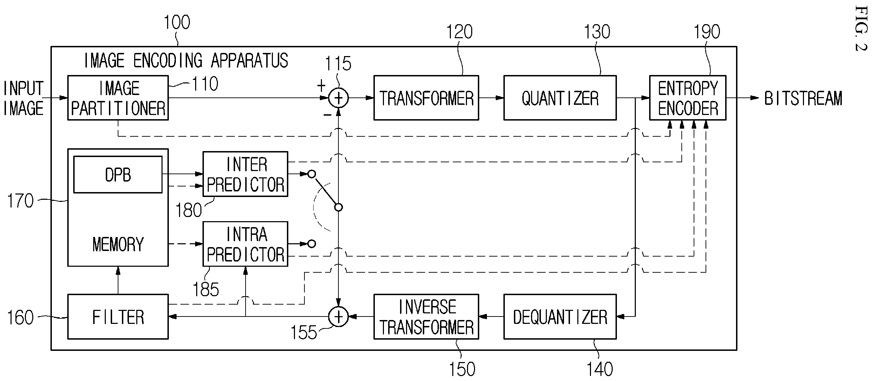

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, luma mapping with chroma scaling (LMCS) is applicable in a picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

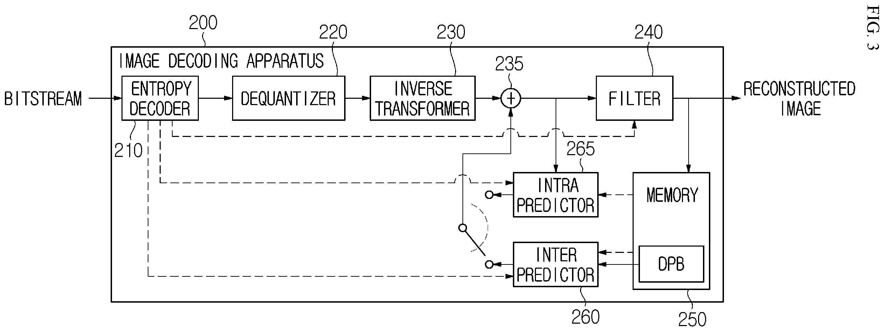

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265.

The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

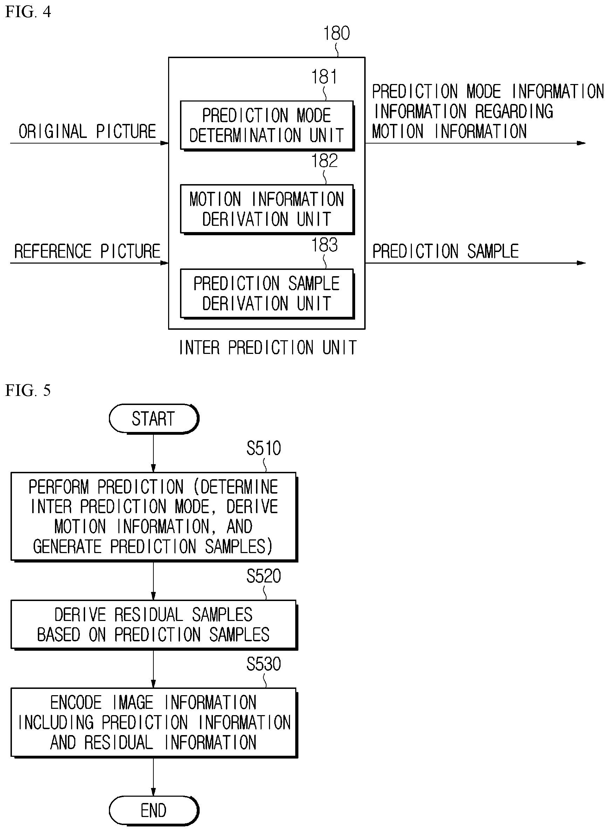

FIG. 4 is a diagram schematically showing the inter prediction unit 180 of the image encoding apparatus 100, and FIG. 5 is a flowchart illustrating a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

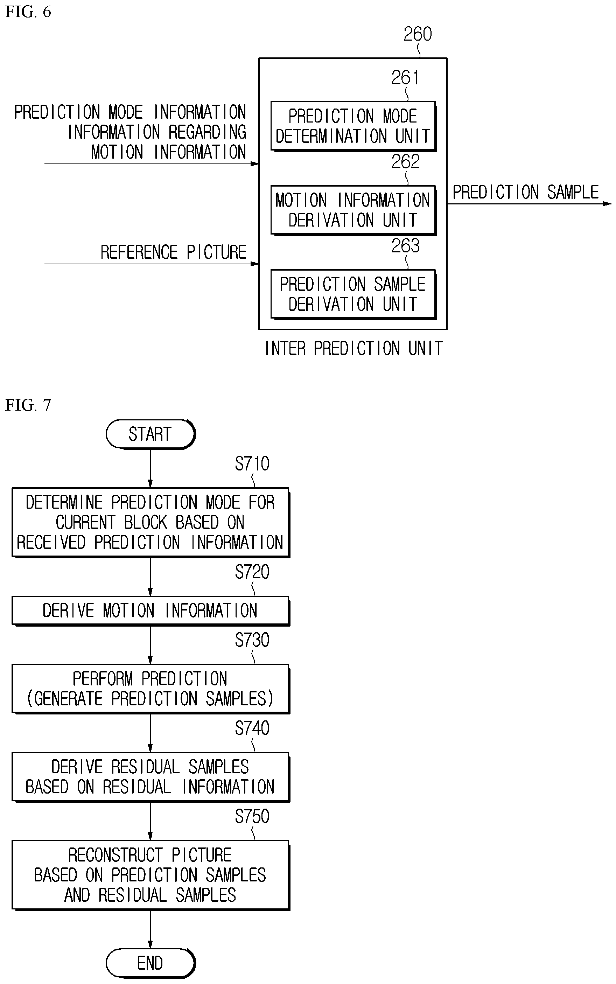

FIG. 6 is a diagram schematically showing the inter prediction unit 260 of the image decoding apparatus 200, and FIG. 7 is a flowchart illustrating a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter prediction unit 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

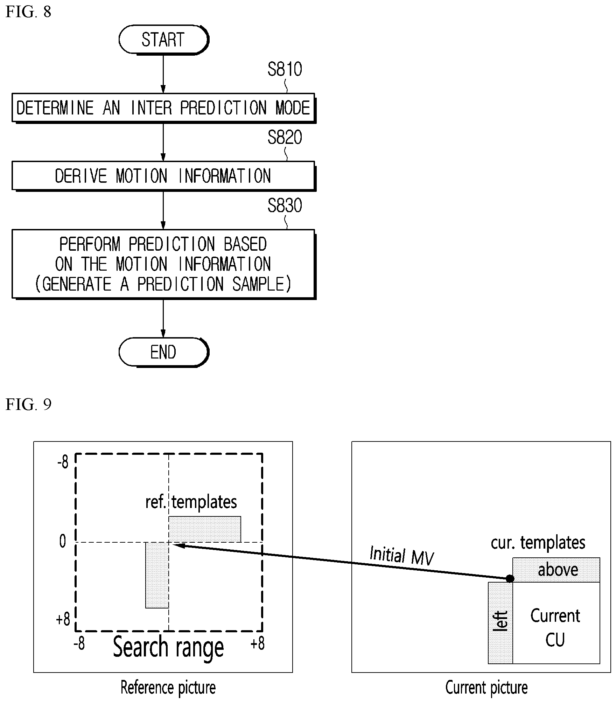

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

**Inter prediction mode determination**

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

**Derivation of motion information**

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

**Generation of prediction sample**

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

**Template matching (TM)**

FIG. 9 is a diagram for explaining a template matching-based encoding/decoding method according to the present disclosure.

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to the current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 9, when an initial motion vector of the current block is derived, a search for a better motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

If the prediction mode of the current block is the AMVP mode, a motion vector predictor candidate (MVP candidate) may be determined based on a template matching error. For example, a motion vector predictor candidate (MVP candidate) that minimizes an error between the current template and the reference template may be selected. After that, template matching for refining a motion vector may be performed on the selected motion vector predictor candidate. At this time, template matching for refining a motion vector may not be performed on motion vector predictor candidates that are not selected.

More specifically, the refinement of the selected motion vector predictor candidate may start from full-pel (integer-pel) accuracy within the [-8, +8]-pel search area using an iterative diamond search. Alternatively, in the case of a 4-pel AMVR mode, it may start from 4-pel accuracy. After that, a search with half-pel and/or quarter-pel accuracy may follow depending on the AMVR mode. According to the search process, the motion vector predictor candidate may maintain the same motion vector accuracy as indicated by the AMVR mode even after the template matching process. In the iterative search process, if a difference between a previous minimum cost and a current minimum cost is less than an arbitrary threshold, the search process is terminated. The threshold may be equal to the area of a block, i.e., the number of samples in the block. Table 1 shows examples of search patterns according to the AMVR mode and the merge mode accompanied with AMVR.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

If the prediction mode of the current block is the merge mode, a similar search method may be applied to the merge candidate indicated by the merge index. As shown in Table 1 above, template matching may be performed up to 1/8-pel accuracy or half-pel accuracy or lower may be skipped, which may be determined depending on whether an alternative interpolation filter is used according to the merge motion information. In this case, the alternative interpolation filter may be a filter used when AMVR is the half-pel mode. In addition, if template matching is available, depending on whether bilateral matching (BM) is available, the template matching may operate as an independent process, or may operate as an additional motion vector refinement process between block-based bilateral matching and subblock-based bilateral matching. Whether the template matching is available and/or whether the bilateral matching is available may be determined according to an availability condition check. In the above, the accuracy of the motion vector may mean the accuracy of a motion vector difference (MVD).

Hereinafter, an image encoding/decoding method according to various embodiments of the present disclosure will be described in detail.

The present disclosure relates to illumination compensation, and more specifically, to an illumination compensation method and an illumination compensation candidate reordering method.

## Embodiment 1

An equation for compensating for an illumination difference between a reference picture and a current picture according to the present disclosure may be as shown in Equation 1 below.

[Equation 1]

$$\sum y \cong a * \sum x + b$$

In Equation 1, a and b may be parameters for illumination compensation (hereinafter, referred to as "illumination compensation parameters"). x may be a signal of a reference picture, and y may mean a signal of a current picture or a signal of an original image. A difference between both sides in Equation 1 may be referred to as an error, and the image encoding apparatus 100 or the image decoding apparatus 200 may obtain illumination compensation parameters a and/or b that may minimize this.

Illumination compensation parameters may be generated based on various units such as picture, tile, slice, CTU, CU, sub-CU, etc. For convenience of explanation, the following description is based on CU.

There are three methods to obtain illumination compensation parameters.

- [Method 1] The illumination compensation parameter may be calculated from an original image pixel of a current CU to which illumination compensation is to be applied and pixel information of a CU in the reference picture.
- [Method 2] The illumination compensation parameter may be calculated from the neighboring pixel information of the current CU to which illumination compensation is to be applied and a reference picture CU.
- [Method 3] The illumination compensation parameter may be calculated by selectively combining Methods 1 and 2.

In the case of Method 1, according to Equation 1, y is an original image pixel corresponding to the current CU, and a CU block close to the original image may be generated from a combination of the pixel information of the reference picture CU and the illumination compensation parameters a, b. Therefore, when using Method 1, it may be useful for reducing residual signals. However, from the perspective of the image decoding apparatus 200, since the original image does not exist, the image encoding apparatus 100 may have to encode and transmit the generated illumination compensation parameters a, b.

In the case of Method 2, according to Equation 1, y may be a neighboring pixel of the current CU, and x may be a neighboring pixel of the reference picture CU. Unlike Method 1, since the illumination compensation parameters a and b are obtained by utilizing the relationship between the neighboring pixels, the neighboring pixels may exist even from the perspective of the image decoding apparatus 200. Therefore, illumination compensation information may be generated without directly encoding the illumination compensation parameters a and b.

The derived illumination compensation parameters a, b may always be applied to the CU to which the illumination compensation is applied. Alternatively, one or more of the derived illumination compensation parameters a, b may not be used or may be replaced with a fixed value. Alternatively, whether to use the illumination compensation parameters a and b may be determined according to predefined conditions. If whether to use the illumination compensation parameters is determined according to predefined conditions, the computational and implementation complexity can be reduced even if some of the compression efficiency improvement is sacrificed. That is, if the degree of compression efficiency improvement obtained through the illumination compensation by applying the illumination compensation parameters is small or if the computational and implementation complexity is unnecessarily increased, it may be determined not to use the illumination compensation parameters, thereby reducing the computational and implementation complexity.

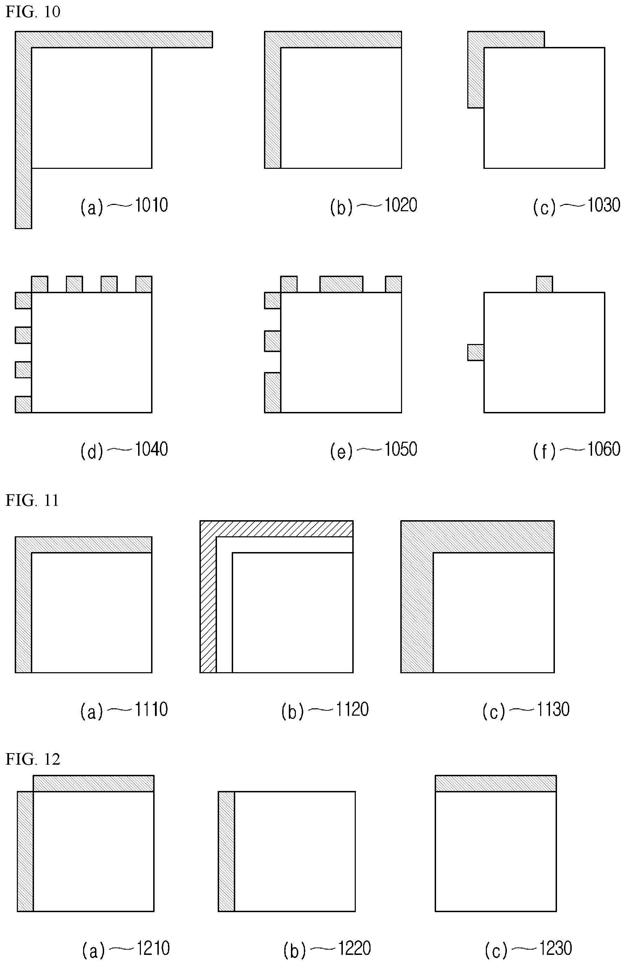

FIG. 10 is a diagram showing the locations of samples within a reference area for deriving illumination compensation parameters according to an embodiment of the present disclosure. When neighboring samples of a current CU and a reference CU are used in order to generate illumination compensation parameters, the neighboring samples of the reference CU may be selected in various ways as follows.

(a) All neighboring samples of the reference CU are used, but more neighboring samples than the size of the reference CU may be used (1010).

(b) All neighboring samples of the reference CU are used, but only neighboring samples within the same range as the size of the reference CU may be used (1020).

(c) Only some of one or more of the neighboring samples of the reference CU may be used (1030).

(d) Only some of one or more of the neighboring samples of the reference CU are used, but some of one or more of the neighboring samples of the reference CU may be used in a subsampled form (1040).

(e) Only some of one or more of the neighboring samples of the reference CU may be used, but some of one or more of the neighboring samples of the reference CU may be used in an irregular form (1050).

(f) Only specific samples representing the neighboring samples of the reference CU may be used (1060). For example, only two neighboring samples may be used, but these values may be the maximum and minimum values among the available pixels, respectively.

(g) The methods of (a) to (f) above may be used in optional combination.

As a method for selecting neighboring samples of a reference CU, the width and/or height of the block may be used as a criterion. For example, the size of the maximum available block may be arbitrarily determined, so that all neighboring samples are used up to a certain width or height, and only some samples may be used if the width or height is larger than that. As another example, a subsampling ratio may be determined so that some samples may be adaptively selected according to the size of the width or height of the block. If the subsampling ratio is 2 and the width or height of the block is 4, only 2 samples may be used. Or, if the subsampling ratio is 2 and the width or height of the block is 8, only 4 samples may be used.

As another example, an arbitrary threshold may be used as a method for selecting neighboring samples of a reference CU. That is, the values of neighboring samples of the reference CU are compared with an arbitrary threshold, and only the samples corresponding to the sample values being greater than or less than the threshold may be used. The methods for selecting neighboring samples of a reference CU mentioned in the present disclosure may be optionally combined.

The subsampling ratio or arbitrary threshold mentioned above may be commonly defined in advance in the image encoding apparatus 100 and/or the image decoding apparatus 200. Alternatively, the subsampling ratio or arbitrary threshold may be transmitted in units of a specific header (SPS, PPS, Picture Header, Slice Header, etc.).

FIG. 11 is a diagram showing the locations of sample lines within a reference area for deriving illumination compensation parameters according to an embodiment of the present disclosure. According to one embodiment of the present disclosure, the locations or number of sample lines within a neighboring area of a reference CU for deriving illumination compensation parameters may vary.

(a) Neighboring samples of the reference CU for deriving illumination compensation parameters may be selected from an area consisting of 1-line samples adjacent to the reference CU (1110).

(b) Neighboring samples of the reference CU for deriving illumination compensation parameters may be selected from an area consisting of 1-line samples not adjacent to the reference CU (1120).

(c) Neighboring samples of the reference CU for deriving illumination compensation parameters may be selected from an area consisting of arbitrary multi-line samples adjacent to the reference CU (1130).

(d) The methods (a) to (c) above may be optionally used.

According to one embodiment of the present disclosure, as a method of selecting an area to which neighboring samples belong, the width and/or height of a block may be used as a criterion. For example, the minimum number of samples required to obtain illumination compensation parameters may be arbitrarily determined. In this case, for a CU having a specific width or height, the corresponding number of samples may be secured only by a 1-line sample area. In this case, 1-line may mean an adjacent or non-adjacent neighboring sample line. For a CU having a width or height smaller than a specific width or height, neighboring samples included in a multi-line sample area may be used.

As another example, an arbitrary threshold may be used as a method of selecting neighboring samples. That is, by comparing the values of neighboring samples with an arbitrary threshold, only the neighboring samples may be used if the values of the neighboring samples are larger or smaller than the threshold. In this case, if the required number of samples in adjacent or non-adjacent 1-line sample area is satisfied, samples may be selected only in the 1-line sample area, and otherwise, samples included in the multi-line sample area may be used to obtain the illumination compensation parameters. The methods of selecting a sample area for selecting neighboring samples of the reference CU mentioned in the present disclosure may be optionally combined.

Information for selecting the sample area may be commonly defined in advance in the image encoding apparatus 100 and/or the image decoding apparatus 200. Alternatively, information for selecting a sample area may be transmitted in units of a specific header (SPS, PPS, Picture Header, Slice Header, etc.).

## Embodiment 2

According to one embodiment of the present disclosure, multiple modes may be used to compensate for illumination changes of a reference picture. In addition, reference samples used to derive multiple modes may be selected based on location. Illumination compensation parameters may be generated based on various units such as picture, tile, slice, CTU, CU, sub-CU, etc. However, for convenience of explanation, the present disclosure will be described based on CU.

The degree of illumination compensation may depend on the illumination compensation parameters a and b. That is, if one parameter set (a, b) is derived from the samples around a current CU and a reference CU corresponding thereto, illumination compensation may be performed in only one form. If multiple illumination compensation parameter sets are derived from the neighboring samples, illumination compensation may be performed in various forms.

FIG. 12 is a diagram illustrating an illumination compensation candidate mode according to an embodiment of the present disclosure. According to one embodiment of the present disclosure, the present disclosure may divide neighboring samples into n sets in order to derive illumination compensation parameters for generating a plurality of illumination compensation candidate modes. FIG. 12 shows a method of generating a plurality of illumination compensation candidate modes according to locations of neighboring samples. Illumination compensation candidate mode (a) 1210 may use all neighboring samples of the current CU and the reference CU as a sample area. Illumination compensation candidate mode (b) 1220 may use only the left neighboring samples as a sample area. Illumination compensation candidate mode (c) 1230 may use only the top neighboring samples as a sample area. FIG. 12 is an example for generating a plurality of illumination compensation candidate modes, and illumination compensation parameters may be derived in various ways using the methods described in Embodiment 1.

## Embodiment 3

When using a plurality of illumination compensation candidate modes, the present disclosure may define the number of illumination compensation candidate modes to be used. The plurality of illumination compensation candidate modes is not limited to three as in Embodiment 2, and the number of illumination compensation candidate modes may be used by determining the same as N in the image encoding apparatus 100 and/or the image decoding apparatus 200. Here, N may be a natural number. Alternatively, the maximum number of illumination compensation candidate modes possible in the higher level syntax may be transmitted.

According to one embodiment of the present disclosure, a flag indicating whether illumination compensation is available may be transmitted in an SPS, and a syntax indicating the number of maximum illumination compensation candidate modes available may be transmitted. Table 2 is a syntax showing a method of transmitting a flag indicating whether illumination compensation is available and a syntax indicating the number of maximum illumination compensation candidate modes available.

[Table 2]

| seq_parameter_set_rbsp( ) { | Descriptor |
|---|---|
| ... | |
| **sps_illumination_compensation_enabled_flag** | u(1) |
| if( sps_illumination_compensation_enabled_flag ) | |
| **sps_max_num_ic_cand** | |
| } | |

In the syntax of Table 2, sps_illumination_compensation_enabled_flag may indicate whether illumination compensation is performed for a CU on which inter prediction is performed. When the value of sps_illumination_compensation_enabled_flag is 1, it may indicate that illumination compensation may be performed for a CU on which inter prediction is performed for CLVS. When the value of sps_illumination_compensation_enabled_flag is 0, it may indicate that illumination compensation cannot be performed for a CU on which inter prediction is performed for CLVS.

In the syntax of Table 1, sps_max_num_ic_cand may indicate the maximum number of illumination compensation candidates supported by SPS. Table 2 shows the method of transmission in SPS, and the number of illumination compensation candidate modes may be transmitted at various header locations (VPS, PPS, Picture Header, Slice Header, etc.) other than SPS.

According to another embodiment of the present disclosure, the number of illumination compensation candidate modes may be determined according to an additional criterion in the same reference unit. Various characteristics such as block size such as block width/height, prediction type, partition type, and transform type, etc., may be used as the additional criterion. For example, when the block size is used as the additional criterion, the number of illumination compensation candidate modes may be defined according to the same criterion previously set by the image encoding apparatus 100 and/or the image decoding apparatus 200. Alternatively, the number of illumination compensation candidate modes may be defined according to whether it is a square block with an NxN shape or a non-square block with an MxN shape. Alternatively, the number of illumination compensation candidate modes may be defined according to the number of samples included in the block. The number of illumination compensation candidate modes according to the additional criterion is not limited to the above-described examples, and may be variously defined according to other combinations.

**Embodiment 4**

The present embodiment relates to a method of transmitting an index when a plurality of illumination compensation candidate modes are used. According to one embodiment of the present disclosure, a flag indicating whether illumination compensation is used may be transmitted in a CU unit. Table 3 below shows a method of transmitting an index when illumination compensation is used.

[Table 3]

| coding_unit( ) { | Descriptor |
|---|---|
| ... | |
| if( sps_illumination_compensation_enabled_flag ) | |
|    cu_ic_flag | ae(v) |
|   if(cu_ic_flag) | |
|     cu_ic_idx | ae(v) |
| ... | |
| } | |

cu_ic_flag is a flag indicating whether illumination compensation is applied to the current CU. If the value of cu_ic_flag is 1, it may indicate that illumination compensation is applied to the current CU. cu_ic_idx may be an index indicating an illumination compensation candidate mode in an illumination compensation list. cu_ic_idx may be defined as shown in Table 4 below.

[Table 4]

| cu_ic_idx | Associated name |
|---|---|
| 0 | IC_TOP_LEFT |
| 1 | IC_TOP |
| 2 | IC_LEFT |

When cu_ic_idx is 0, the illumination compensation parameters can be derived using both the top sample and the left sample. When cu_ic_idx is 1, the illumination compensation parameters can be derived using only the top sample. When cu_ic_idx is 2, the illumination compensation parameters can be derived using only the left sample.

According to another embodiment of the present disclosure, whether illumination compensation is applied to a CU and index information may be integrated into a single syntax and transmitted. In this case, one of index entries may indicate that illumination compensation is not applied, and the remaining index entries may indicate a specific mode among a plurality of illumination compensation candidate modes. In this case, the entry indicating that illumination compensation is not applied may be the first (0th) entry. Table 5 below shows a method of integrating whether to apply illumination compensation and the index information into a single syntax and transmitting it.

[Table 5]

| coding_unit( ) { | Descriptor |
|---|---|
| ... | |
| if( sps_illumination_compensation_enabled_flag ) | |
| cu_ic_idx | ae(v) |
| ... | |
| } | |

The meaning of cu_ic_idx in Table 5 may be defined as in Table 6 below.

[Table 6]

| cu_ic_idx | Associated name |
|---|---|
| 0 | IC_NO_USE |
| 1 | IC_TOP_LEFT |
| 2 | IC_TOP |
| 3 | IC_LEFT |

The examples of index transmission of illumination compensation candidate modes may be examples for a case where three illumination compensation candidate modes are used, as in Embodiment 2. When the maximum number of illumination compensation candidate modes is defined according to Embodiment 3, the index may be transmitted according to the corresponding number. That is, the cu_ic_idx value may be less than or equal to sps_max_num_ic_cand. The index transmission of illumination compensation candidate modes according to the present disclosure is not limited to the above-described examples and may be transmitted in other forms.

**Embodiment 5**

The present embodiment relates to a method of constructing an index candidate list when using a plurality of illumination compensation candidate modes. Embodiment 4 relates to a case where the locations of illumination compensation candidate modes for deriving illumination compensation parameters according to index locations are defined in advance and used fixedly. However, the present disclosure may reorder illumination compensation candidate modes according to template cost.

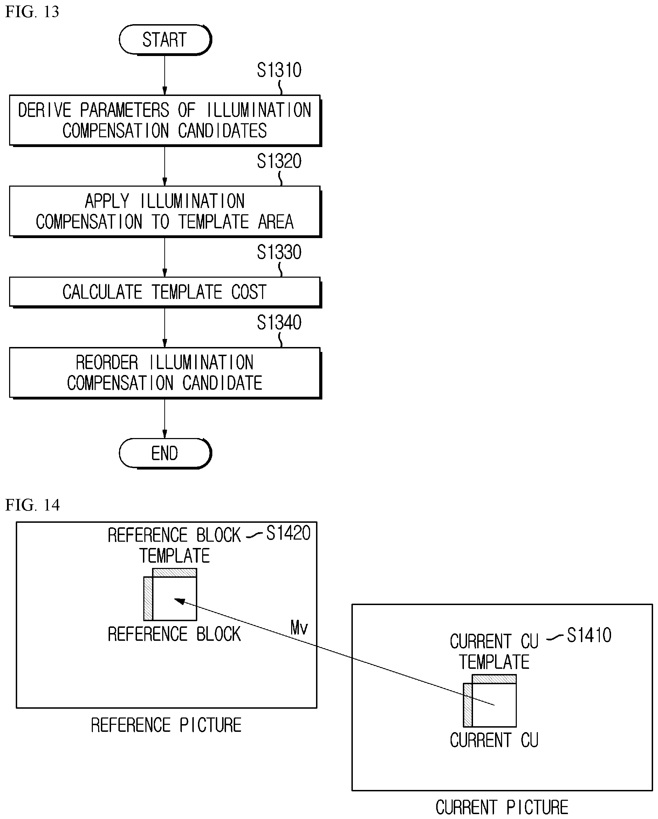

FIG. 13 is a flowchart illustrating a method for reordering illumination compensation candidate modes according to an embodiment of the present disclosure. Hereinafter, the image encoding apparatus 100 will be described as the subject, but it is obvious that the image decoding apparatus 200 may also be the subject.
The image encoding apparatus 100 may derive parameters of illumination compensation candidates (S1310). That is, the image encoding apparatus 100 may derive illumination compensation parameters for each illumination compensation candidate mode. When {IC_TOP_LEFT, IC_TOP, IC_LEFT} is used as the illumination compensation candidate mode, illumination compensation parameters {a, b} may be derived using samples at the corresponding locations.
The image encoding apparatus 100 may apply illumination compensation to a template area (S1320). That is, illumination compensation parameter may be applied to the template area of a reference block. Here, the template area may be a predetermined adjacent area adjacent to the reference block. Thereafter, the image encoding apparatus 100 may calculate template cost (S1330). Specifically, the image encoding apparatus 100 may calculate an illumination difference (template cost or template error) between the template area of a current block and the template area of a reference block to which illumination compensation is applied. At this time, SAD (Sum of Absolute Difference), SATD (Sum of Absolute Transformed Difference), SSD (Sum of Squared Difference), or the like may be used to obtain the template cost.
FIG. 14 is a diagram showing template locations for template cost calculation according to an embodiment of the present disclosure. A template 1410 of a current CU may be left and top samples adjacent to the current CU, and a template 1420 of a reference block may be left and top samples adjacent to the reference block.
The image encoding apparatus 100 may reorder the illumination compensation candidates (S1340). Specifically, the image encoding apparatus 100 may reorder the illumination compensation candidate modes based on the template cost. Here, the reordering may mean sorting the template costs in order from small to large. The illumination compensation candidate list may be constructed in the order of illumination compensation candidate modes to which illumination compensation is likely to be applied through reordering based on the template cost. After performing illumination compensation candidate reordering, the image encoding apparatus 100 may transmit an index indicating the illumination compensation candidate mode as in Embodiment 4. At this time, the index indicating the illumination compensation candidate mode may be transmitted for all possible illumination compensation candidate modes, or may be transmitted for only some candidates in order to reduce flag transmission bits.

A method of transmitting a syntax representing an illumination compensation index according to the present disclosure may be as shown in Table 7 below.

[Table 7]

| coding_unit( ) { | Descriptor |
|---|---|
| ... | |
| if( sps_illumination_compensation_enabled_flag ) | |
|    **cu_ic_flag** | ae(v) |
|   if(cu_ic_flag) | |
|    **cu_ic_idx_flag** | ae(v) |
| ... | |
| } | |

In Table 7, if cu_ic_flag is 1, it indicates that illumination compensation may be applied to the current CU. If cu_ic_idx_flag is 0, it may indicate that the first illumination compensation candidate mode in the reordered illumination compensation candidate list is used. If cu_ic_idx_flag is 1, it may indicate that the second illumination compensation candidate mode in the reordered illumination compensation candidate list is used. The meaning of cu_ic_idx_flag may be defined as in Table 8 below.

[Table 8]

| cu_ic_idx_flag | Associated name |
|---|---|
| 0 | 1st candidate |
| 1 | 2nd candidate |

When cu_ic_idx_flag is 0, the first candidate of the reordered illumination compensation candidate list may be selected. When cu_ic_idx_flag is 1, the second candidate of the reordered illumination compensation candidate list may be selected. The index transmission of the illumination compensation candidate mode according to the present disclosure is not limited to the above-described examples, and the range of transmitted index values may be less than or equal to the maximum number of illumination compensation candidate modes.

**Embodiment 6**

The present embodiment relates to a method of deriving an illumination compensation candidate mode when a prediction mode of a current block is a merge mode. When a current CU is in the merge mode, the illumination compensation candidate mode information of the selected merge candidate maybe used without change. At this time, the illumination compensation candidate mode information may indicate whether the illumination compensation candidate mode is applied and illumination compensation parameter derivation location information. Here, the location information may indicate the locations of neighboring samples required when calculating illumination compensation parameters. The illumination compensation parameters of the current CU may be directly calculated from the neighboring samples of the current block. Alternatively, the illumination compensation parameters of the current CU may use the illumination compensation parameters of an adjacent block.

According to another embodiment of the present disclosure, when the current CU is in merge mode, only whether to apply an illumination compensation candidate mode can be derived from a selected merge candidate. When illumination compensation is used, the image encoding apparatus 100 and/or the image decoding apparatus 200 may derive a plurality of illumination compensation candidate modes as in Embodiment 5 and reorder the derived illumination compensation candidate list. By reordering the illumination compensation candidate list, illumination compensation may be performed using a candidate having the minimum template cost.

According to another embodiment of the present disclosure, when the current CU is in the merge mode, whether to use the illumination compensation candidate mode information may be adaptively determined based on the illumination compensation candidate mode information of the selected merge candidate and additional criteria of the block. The additional criteria may include various characteristics such as the block size such as block width and/or height, prediction type, partition type, transform type, etc. Alternatively, whether to apply illumination compensation may be determined based on the template cost before and after illumination compensation.

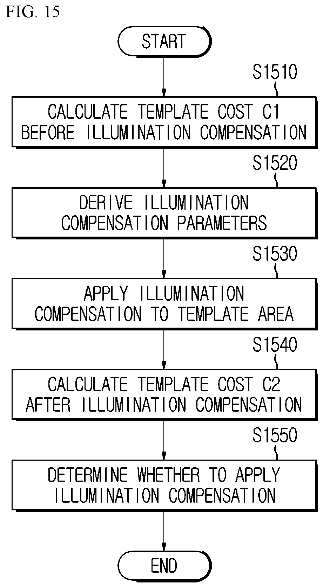

FIG. 15 is a flowchart illustrating a method of applying adaptive illumination compensation according to an embodiment of the present disclosure. Hereinafter, in FIG. 15, the image encoding apparatus 100 will be described as the subject, but it is obvious that the image decoding apparatus 200 may be the subject. The image encoding apparatus 100 may calculate template cost C1 before illumination compensation (S1510). Specifically, the image encoding apparatus 100 may calculate a template difference (template cost) C1 between a template composed of neighboring samples of the current CU and a template composed of neighboring samples of a reference block. Here, the template of the reference block may be in a state where illumination compensation is not applied.

The image encoding apparatus 100 may apply illumination compensation to a template area (S1520). Specifically, the image encoding apparatus 100 may obtain information about illumination compensation from the selected merge mode. Thereafter, the image encoding apparatus 100 may obtain illumination compensation parameters using samples at locations indicated by the information about illumination compensation.

The image encoding apparatus 100 may apply illumination compensation to the template area (S1530). That is, the illumination compensation parameters may be applied to the template of the reference block. Thereafter, the image encoding apparatus 100 may calculate template cost C2 after illumination compensation (S1540). Specifically, the image encoding apparatus 100 may calculate the template cost C2 between the template composed of the neighboring samples of the current CU and the template composed of the neighboring samples of the reference block to which illumination compensation is applied.

The image encoding apparatus 100 may determine whether to apply illumination compensation (S1550). Specifically, the image encoding apparatus 100 may compare a difference between C1 and C2 and determine whether to apply illumination compensation according to a specific threshold. For example, if the value of C2/C1 is greater than 0.9, illumination compensation may be applied. The present disclosure is not limited to the above-described example, and any real number value between 0 and 10 may be used as the threshold for determining whether to apply illumination compensation.

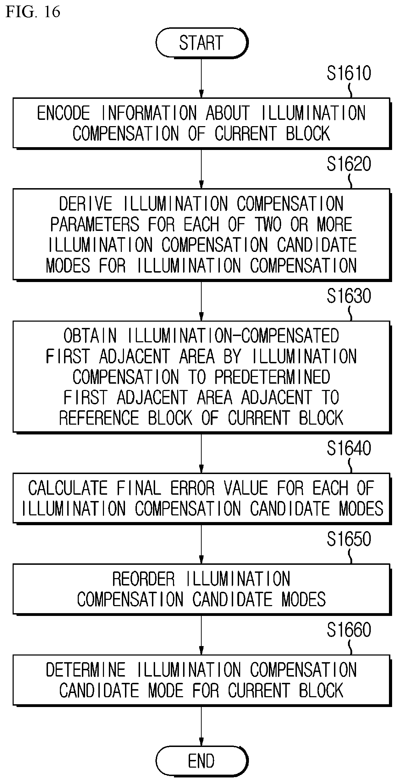

FIG. 16 is a flowchart illustrating an illumination compensation list reordering method in an image encoding apparatus according to an embodiment of the present disclosure. The image encoding apparatus 100 may encode information about illumination compensation of a current block (S1610). At this time, the information about illumination compensation may include at least one of information indicating whether illumination compensation is capable of being performed on the current block, information indicating whether illumination compensation is applied to the current block, or an index indicating one of illumination compensation candidate modes. For example, the information indicating whether illumination compensation is capable of being performed on the current block may be sps_illumonation_compensation_enable_flag. The information indicating whether illumination compensation is applied to the current block may be cu_ic_flag. The index may be cu_ic_idx_flag.

The image encoding apparatus 100 may derive illumination compensation parameters for each of two or more illumination compensation candidate modes for illumination compensation (S 1620). Here, the illumination compensation mode may include at least one of a first mode that uses both the left adjacent area and the top adjacent area of the current block and the reference block, a second mode that uses only the left adjacent area of the current block and the reference block, or a third mode that uses only the top adjacent area of the current block and the reference block.

The image encoding apparatus 100 may obtain an illumination-compensated first adjacent area by applying illumination compensation to a predetermined first adjacent area adjacent to the reference block of the current block (S1630). Specifically, the image encoding apparatus 100 may obtain an illumination-compensated first adjacent area by applying illumination compensation to the first adjacent area based on illumination compensation parameters for each of the illumination compensation candidate modes. Here, the first adjacent area may be a template area of the reference block.

The image encoding apparatus 100 may calculate a final error value for each of the illumination compensation candidate modes (S1640). Specifically, the image encoding apparatus 100 may obtain the final error value for each of the illumination compensation candidate modes based on an error between a sample value in the illumination-compensated first adjacent area and a sample value in a predetermined second adjacent area adjacent to the current block. Here, the second adjacent area may be a template area of the current block. In addition, the first adjacent area and the second adjacent area may be at corresponding locations. The final error value may be template cost.

The image encoding apparatus 100 may reorder the illumination compensation candidate modes (S1650). Specifically, the illumination compensation candidate modes may be reordered based on the final error value for each of the illumination compensation candidate modes. For example, the reordering of the illumination compensation candidate modes may be a process of sorting the final error values in ascending order.

The image encoding apparatus 100 may determine an illumination compensation candidate mode for the current block (S1660). Specifically, the image encoding apparatus 100 may determine the illumination compensation candidate mode for the current block based on the reordered illumination compensation candidate modes and the information about illumination compensation.

According to another embodiment of the present disclosure, when the prediction mode of the current block is the merge mode, information about illumination compensation may be obtained from information about illumination compensation of the selected merge candidate of the current block. Here, information about illumination compensation of the selected merge candidate of the current block may be obtained based on at least one of the size, prediction type, partition type, or transform type of the current block.

According to another embodiment of the present disclosure, information indicating whether illumination compensation is applied to the current block may be obtained based on the first error value for an illumination compensation candidate mode calculated based on the first adjacent area and the second adjacent area before illumination compensation and the final error value. At this time, obtaining of information indicating whether illumination compensation is applied to the current block may be determined further based on a threshold. For example, obtaining of information indicating whether illumination compensation is applied to the current block may be performed by comparing a difference value between the final error value and the first error value with the threshold. If the difference value between the final error value and the first error value is greater than the threshold, information indicating whether illumination compensation is applied to the current block may be obtained, and if the difference value between the final error value and the first error value is less than or equal to the threshold, information indicating whether illumination compensation is applied to the current block may not be obtained. Alternatively, there may be a case opposite to the above example. For example, if the difference between the final error value and the first error value is greater than the threshold, information indicating whether illumination compensation is applied to the current block may not be obtained, and if the difference between the final error value and the first error value is less than or equal to the threshold, information indicating whether illumination compensation is applied to the current block may be obtained.

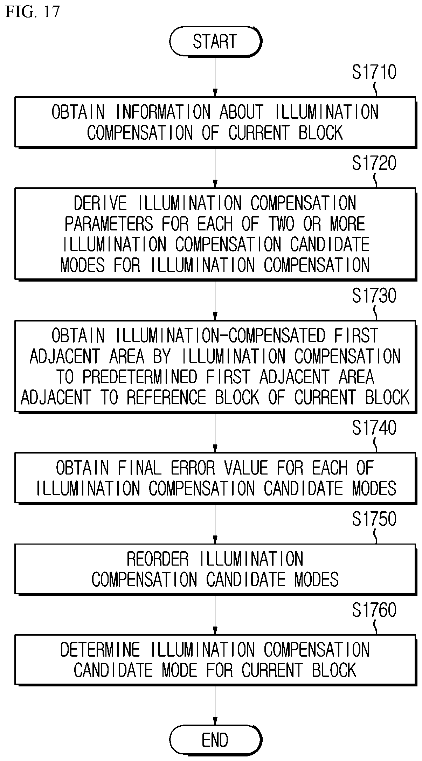

FIG. 17 is a flowchart illustrating an illumination compensation list reordering method in an image decoding apparatus according to an embodiment of the present disclosure. The image decoding apparatus 200 may obtain information about illumination compensation of a current block (S1710). At this time, the information about illumination compensation may include at least one of information indicating whether illumination compensation is capable of being performed on the current block, information indicating whether illumination compensation is applied to the current block, or an index indicating one of illumination compensation candidate modes. For example, information indicating whether illumination compensation is capable of being performed on the current block may be sps_illumonation_compensation_enable_flag. Information indicating whether illumination compensation is applied to the current block may be cu_ic_flag. The index may be cu_ic_idx_flag.

The image decoding apparatus 200 may derive illumination compensation parameters for each of two or more illumination compensation candidate modes for illumination compensation (S 1720). Here, the illumination compensation mode may include at least one of a first mode that uses both the left adjacent area and the top adjacent area of the current block and the reference block, a second mode that uses only the left adjacent area of the current block and the reference block, or a third mode that uses only the top adjacent area of the current block and the reference block.

The image decoding apparatus 200 may obtain an illumination-compensated first adjacent area by applying illumination compensation to a predetermined first adjacent area adjacent to the reference block of the current block (S1730). Specifically, the image decoding apparatus 200 may obtain an illumination-compensated first adjacent area by applying illumination compensation to the first adjacent area based on illumination compensation parameters for each of the illumination compensation candidate modes. Here, the first adjacent area may be a template area of the reference block.

The image decoding apparatus 200 may calculate a final error value for each of the illumination compensation candidate modes (S1740). Specifically, the image decoding apparatus 200 may obtain the final error value for each of the illumination compensation candidate modes based on an error between a sample value in the illumination-compensated first adjacent area and a sample value in a predetermined second adjacent area adjacent to the current block. Here, the second adjacent area may be a template area of the current block. In addition, the first adjacent area and the second adjacent area may be at corresponding locations. The final error value may be template cost.

The image decoding apparatus 200 may reorder the illumination compensation candidate modes (S1750). Specifically, the illumination compensation candidate modes may be reordered based on the final error value for each of the illumination compensation candidate modes. For example, the reordering of the illumination compensation candidate modes may be a process of sorting the final error values in ascending order.

The image decoding apparatus 200 may determine an illumination compensation candidate mode for the current block (S1760). Specifically, the image decoding apparatus 200 may determine an illumination compensation candidate mode for the current block based on the reordered illumination compensation candidate modes and the information about illumination compensation.

According to another embodiment of the present disclosure, when the prediction mode of the current block is the merge mode, information about illumination compensation may be obtained from information about illumination compensation of the selected merge candidate of the current block. Here, information about illumination compensation of the selected merge candidate of the current block may be obtained based on at least one of the size, prediction type, segmentation type, or transformation type of the current block.

According to another embodiment of the present disclosure, information indicating whether illumination compensation is applied to the current block may be obtained based on the first error value for an illumination compensation candidate mode calculated based on the first adjacent area and the second adjacent area before illumination compensation and the final error value. At this time, obtaining of information indicating whether illumination compensation is applied to the current block may be determined further based on a threshold. For example, obtaining of information indicating whether illumination compensation is applied to the current block may be performed by comparing a difference value between the final error value and the first error value with the threshold. If the difference value between the final error value and the first error value is greater than the threshold, information indicating whether illumination compensation is applied to the current block may be obtained, and if the difference value between the final error value and the first error value is less than or equal to the threshold, information indicating whether illumination compensation is applied to the current block may not be obtained. Alternatively, there may be a case opposite to the above example. For example, if the difference between the final error value and the first error value is greater than the threshold, information indicating whether illumination compensation is applied to the current block may not be obtained, and if the difference between the final error value and the first error value is less than or equal to the threshold, information indicating whether illumination compensation is applied to the current block may be obtained.

While the exemplary methods of the present disclosure described above are represented as a series of operations for clarity of description, it is not intended to limit the order in which the steps are performed, and the steps may be performed simultaneously or in different order as necessary. **In** order to implement the method according to the present disclosure, the described steps may further include other steps, may include remaining steps except for some of the steps, or may include other additional steps except for some steps.

**In** the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

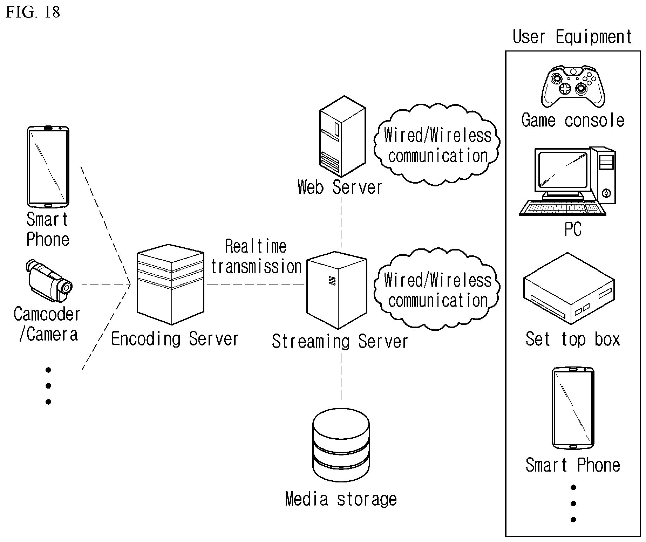

FIG. 18 is a view showing a content streaming system, to which an embodiment of the present disclosure is applicable.

As shown in FIG. 18, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   obtaining information about illumination compensation of a current block;
   deriving illumination compensation parameters for each of two or more illumination compensation candidate modes for the illumination compensation;
   obtaining an illumination-compensated first adjacent area by applying illumination compensation to a predetermined first adjacent area adj acent to a reference block of the current block based on the illumination compensation parameters;
   obtaining a final error value for each of the illumination compensation candidate modes based on an error between a sample value in the illumination-compensated first adjacent area and a sample value in a predetermined second adjacent area adjacent to the current block;
   reordering the illumination compensation candidate modes based on the final error value; and
   determining an illumination compensation candidate mode for the current block based on the reordered illumination compensation candidate modes and the information about illumination compensation,
   wherein the first adjacent area and the second adjacent area are at corresponding locations.

2. The image decoding method of claim 1, wherein the information about the illumination compensation includes at least one of information indicating whether illumination compensation is capable of being performed on the current block, information indicating whether illumination compensation is applied to the current block, or an index indicating one of the illumination compensation candidate modes.

3. The image decoding method of claim 1, wherein the illumination compensation candidate mode includes at least one of a first mode that uses both a left adjacent area and a top adjacent area of the current block and the reference block, a second mode that uses only the left adjacent area of the current block and the reference block, or a third mode that uses only the top adjacent area of the current block and the reference block.

4. The image decoding method of claim 1, wherein the reordering means sorting the final error value in ascending order.

5. The image decoding method of claim 2, wherein based on a prediction mode of the current block being a merge mode, the information about the illumination compensation is obtained from information about illumination compensation of a selected merge candidate of the current block.

6. The image decoding method of claim 5, wherein the information about illumination compensation of the selected merge candidate of the current block is obtained based on at least one of the size, prediction type, partition type, or transform type of the current block.

7. The image decoding method of claim 5, wherein the information indicating whether illumination compensation is applied to the current block is obtained based on a first error value for the illumination compensation candidate mode calculated based on the first adjacent area and the second adjacent area before illumination compensation and the final error value.

8. The image decoding method of claim 7, wherein obtaining of the information indicating whether the illumination compensation is applied to the current block is determined further based on a threshold.

9. The image decoding method of claim 8, wherein obtaining of the information indicating whether the illumination compensation is applied to the current block is performed by comparing a difference value between the final error value and the first error value with the threshold.

10. An image encoding method performed by an image encoding apparatus, the image encoding method comprising:

    encoding information about illumination compensation of a current block;
    deriving illumination compensation parameters for each of two or more illumination compensation candidate modes for the illumination compensation;
    obtaining an illumination-compensated first adjacent area by applying illumination compensation to a predetermined first adjacent area adj acent to a reference block of the current block based on the illumination compensation parameters for each of the illumination compensation candidate modes;
    obtaining a final error value for each of the illumination compensation candidate modes based on an error between a sample value in the illumination-compensated first adjacent area and a sample value in a predetermined second adjacent area adjacent to the current block;
    reordering the illumination compensation candidate modes based on the final error value for each of the illumination compensation candidate modes; and
    determining an illumination compensation candidate mode for the current block based on the reordered illumination compensation candidate modes and the information about illumination compensation,
    wherein the first adjacent area and the second adjacent area are at corresponding locations.

11. A method of transmitting a bitstream generated by an image encoding method, the image encoding method comprising:

    encoding information about illumination compensation of a current block;
    deriving illumination compensation parameters for each of two or more illumination compensation candidate modes for the illumination compensation;
    obtaining an illumination-compensated first adjacent area by applying illumination compensation to a predetermined first adjacent area adj acent to a reference block of the current block based on the illumination compensation parameters for each of the illumination compensation candidate modes;
    obtaining a final error value for each of the illumination compensation candidate modes based on an error between a sample value in the illumination-compensated first adjacent area and a sample value in a predetermined second adjacent area adjacent to the current block;
    reordering the illumination compensation candidate modes based on the final error value for each of the illumination compensation candidate modes; and
    determining an illumination compensation candidate mode for the current block based on the reordered illumination compensation candidate modes and the information about illumination compensation,
    wherein the first adjacent area and the second adjacent area are at corresponding locations.

FIG. 1

EP 4 554 218 A1

FIG. 2

FIG. 3

FIG. 4

PREDICTION MODE INFORMATION
INFORMATION REGARDING
MOTION INFORMATION

PREDICTION SAMPLE

FIG. 5

FIG. 6

FIG. 7

FIG. 8

```
           ┌─────────────┐
           │   START     │
           └──────┬──────┘
                  │              S810
    ┌─────────────▼──────────────────┐
    │ DETERMINE AN INTER PREDICTION MODE │
    └─────────────┬──────────────────┘
                  │              S820
    ┌─────────────▼──────────────────┐
    │     DERIVE MOTION INFORMATION    │
    └─────────────┬──────────────────┘
                  │              S830
    ┌─────────────▼──────────────────┐
    │      PERFORM PREDICTION BASED    │
    │      ON THE MOTION INFORMATION   │
    │    (GENERATE A PREDICTION SAMPLE) │
    └─────────────┬──────────────────┘
                  │
           ┌──────▼──────┐
           │    END      │
           └─────────────┘
```

FIG. 9

Reference picture                    Current picture

FIG. 10

(a) ～1010

(b) ～1020

(c) ～1030

(d) ～1040

(e) ～1050

(f) ～1060

FIG. 11

(a) ～1110

(b) ～1120

(c) ～1130

FIG. 12

(a) ～1210

(b) ～1220

(c) ～1230

FIG. 13

```
                    START
                       |
                       |          S1310
                       v
      DERIVE PARAMETERS OF ILLUMINATION
         COMPENSATION CANDIDATES
                       |
                       |          S1320
                       v
            APPLY ILLUMINATION
      COMPENSATION TO TEMPLATE AREA
                       |
                       |          S1330
                       v
          CALCULATE TEMPLATE COST
                       |
                       |          S1340
                       v
            REORDER ILLUMINATION
         COMPENSATION CANDIDATE
                       |
                       v
                     END
```

FIG. 14

REFERENCE BLOCK — S1420
TEMPLATE

REFERENCE BLOCK

Mv

CURRENT CU — S1410
TEMPLATE

CURRENT CU

REFERENCE PICTURE

CURRENT PICTURE

FIG. 15

```
              ┌─────────────┐
              │    START    │
              └──────┬──────┘
                     │            S1510
      ┌──────────────▼──────────────┐
      │   CALCULATE TEMPLATE COST C1 │
      │ BEFORE ILLUMINATION COMPENSATION │
      └──────────────┬──────────────┘
                     │            S1520
      ┌──────────────▼──────────────┐
      │     DERIVE ILLUMINATION     │
      │   COMPENSATION PARAMETERS   │
      └──────────────┬──────────────┘
                     │            S1530
      ┌──────────────▼──────────────┐
      │      APPLY ILLUMINATION     │
      │ COMPENSATION TO TEMPLATE AREA │
      └──────────────┬──────────────┘
                     │            S1540
      ┌──────────────▼──────────────┐
      │   CALCULATE TEMPLATE COST C2 │
      │ AFTER ILLUMINATION COMPENSATION │
      └──────────────┬──────────────┘
                     │            S1550
      ┌──────────────▼──────────────┐
      │   DETERMINE WHETHER TO APPLY │
      │    ILLUMINATION COMPENSATION │
      └──────────────┬──────────────┘
                     │
              ┌──────▼──────┐
              │     END     │
              └─────────────┘
```

FIG. 16

```
                    ┌─────────────┐
                    │    START    │
                    └──────┬──────┘
                           │                    S1610
          ┌────────────────▼────────────────────┐
          │  ENCODE INFORMATION ABOUT ILLUMINATION│
          │   COMPENSATION OF CURRENT BLOCK      │
          └────────────────┬────────────────────┘
                           │                    S1620
          ┌────────────────▼────────────────────┐
          │    DERIVE ILLUMINATION COMPENSATION  │
          │   PARAMETERS FOR EACH OF TWO OR MORE │
          │   ILLUMINATION COMPENSATION CANDIDATE│
          │   MODES FOR ILLUMINATION COMPENSATION│
          └────────────────┬────────────────────┘
                           │                    S1630
          ┌────────────────▼────────────────────┐
          │   OBTAIN ILLUMINATION-COMPENSATED    │
          │   FIRST ADJACENT AREA BY ILLUMINATION│
          │    COMPENSATION TO PREDETERMINED     │
          │     FIRST ADJACENT AREA ADJACENT TO  │
          │    REFERENCE BLOCK OF CURRENT BLOCK  │
          └────────────────┬────────────────────┘
                           │                    S1640
          ┌────────────────▼────────────────────┐
          │  CALCULATE FINAL ERROR VALUE FOR EACH OF│
          │ ILLUMINATION COMPENSATION CANDIDATE MODES│
          └────────────────┬────────────────────┘
                           │                    S1650
          ┌────────────────▼────────────────────┐
          │        REORDER ILLUMINATION         │
          │     COMPENSATION CANDIDATE MODES     │
          └────────────────┬────────────────────┘
                           │                    S1660
          ┌────────────────▼────────────────────┐
          │   DETERMINE ILLUMINATION COMPENSATION│
          │    CANDIDATE MODE FOR CURRENT BLOCK  │
          └────────────────┬────────────────────┘
                           │
                    ┌──────▼──────┐
                    │     END     │
                    └─────────────┘
```

FIG. 17

```
                    ┌──────────┐
                    │   START   │
                    └──────────┘
                          │
                          │                    S1710
                          ▼
┌─────────────────────────────────────────────┐
│      OBTAIN INFORMATION ABOUT ILLUMINATION    │
│        COMPENSATION OF CURRENT BLOCK          │
└─────────────────────────────────────────────┘
                          │
                          │                    S1720
                          ▼
┌─────────────────────────────────────────────┐
│         DERIVE ILLUMINATION COMPENSATION      │
│        PARAMETERS FOR EACH OF TWO OR MORE     │
│         ILLUMINATION COMPENSATION CANDIDATE   │
│        MODES FOR ILLUMINATION COMPENSATION    │
└─────────────────────────────────────────────┘
                          │
                          │                    S1730
                          ▼
┌─────────────────────────────────────────────┐
│       OBTAIN ILLUMINATION-COMPENSATED FIRST   │
│      ADJACENT AREA BY ILLUMINATION COMPENSATION│
│          TO PREDETERMINED FIRST ADJACENT AREA │
│      ADJACENT TO REFERENCE BLOCK OF CURRENT BLOCK│
└─────────────────────────────────────────────┘
                          │
                          │                    S1740
                          ▼
┌─────────────────────────────────────────────┐
│        OBTAIN FINAL ERROR VALUE FOR EACH OF   │
│      ILLUMINATION COMPENSATION CANDIDATE MODES │
└─────────────────────────────────────────────┘
                          │
                          │                    S1750
                          ▼
┌─────────────────────────────────────────────┐
│             REORDER ILLUMINATION              │
│        COMPENSATION CANDIDATE MODES           │
└─────────────────────────────────────────────┘
                          │
                          │                    S1760
                          ▼
┌─────────────────────────────────────────────┐
│      DETERMINE ILLUMINATION COMPENSATION      │
│        CANDIDATE MODE FOR CURRENT BLOCK       │
└─────────────────────────────────────────────┘
                          │
                          ▼
                    ┌──────────┐
                    │    END    │
                    └──────────┘
```

FIG. 18

## INTERNATIONAL SEARCH REPORT

| International application No. |
| --- |
| **PCT/KR2023/009192** |

**A.     CLASSIFICATION OF SUBJECT MATTER**

**H04N 19/513**(2014.01)i; **H04N 19/186**(2014.01)i; **H04N 19/105**(2014.01)i; **H04N 19/70**(2014.01)i; **H04N 19/109**(2014.01)i

According to International Patent Classification (IPC) or to both national classification and IPC

**B.     FIELDS SEARCHED**

Minimum documentation searched (classification system followed by classification symbols)

H04N 19/513(2014.01); H04N 19/105(2014.01); H04N 19/132(2014.01); H04N 19/136(2014.01); H04N 19/51(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 휘도 보상(illumination compensation), 현재 블록(current block), 파라미터(parameter), 인접(neighbor), 영역(region), 오차(cost), 모드(mode)

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 2021-518998 A (VID SCALE, INC.) 05 August 2021 (2021-08-05)<br>    See paragraphs [0021]-[0022]; and claims 1 and 6. | 1-2,4-5,10-11 |
| A | | 3,6-9 |
| Y | CHEN, Chun-Chi et al. Non-EE2: Template matching based reordering for GPM split modes. Joint Video Experts Team (JVET) of ITU-T SG 16 WP 3 and ISO/IEC JTC 1/SC 29 25th Meeting, by teleconference, JVET-Y0135-v2. 14 January 2022.<br>    [Retrieved on 30 August 2023]. Retrieved from <URL: https://www.jvet-experts.org/doc_end_user/current_document.php?id=11329>.<br>    See pages 1-2; and figure 1. | 1-2,4-5,10-11 |
| A | KR 10-2020-0100656 A (SAMSUNG ELECTRONICS CO., LTD.) 26 August 2020 (2020-08-26)<br>    See paragraphs [0006]-[0009]; and claims 1-13. | 1-11 |
| A | KR 10-2021-0113188 A (VID SCALE, INC.) 15 September 2021 (2021-09-15)<br>    See paragraphs [0133]-[0177]; claims 1-10; and figures 12-15. | 1-11 |

☑ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2023** | **26 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/009192** |

**C.      DOCUMENTS CONSIDERED TO BE RELEVANT**

| Category* | Citation of document, with indication, where appropriate, of the relevant passages | Relevant to claim No. |
| --- | --- | --- |
| A | XIE, Zhihuang et al. Non-EE2: Improvement on Local Illumination Compensation. Joint Video Experts Team (JVET) of ITU-T SG 16 WP 3 and ISO/IEC JTC 1/SC 29 26th Meeting, by teleconference, JVET-Z0126-v2. 20 April 2022.<br>      [Retrieved on 30 August 2023]. Retrieved from <URL: https://www.jvet-experts.org/doc_end_user/current_document.php?id=11574>.<br>      See pages 1-3. | 1-11 |

Form PCT/ISA/210 (second sheet) (July 2022)

**INTERNATIONAL SEARCH REPORT**
Information on patent family members

International application No.

**PCT/KR2023/009192**

| Patent document cited in search report | | | Publication date (day/month/year) | Patent family member(s) | | | Publication date (day/month/year) |
|---|---|---|---|---|---|---|---|
| JP | 2021-518998 | A | 05 August 2021 | CN | 111630855 | A | 04 September 2020 |
| | | | | EP | 3741115 | A1 | 25 November 2020 |
| | | | | JP | 2022-163175 | A | 25 October 2022 |
| | | | | JP | 7125486 | B2 | 24 August 2022 |
| | | | | MX | 2020007355 | A | 12 October 2020 |
| | | | | TW | 201941601 | A | 16 October 2019 |
| | | | | TW | I785188 | B | 01 December 2022 |
| | | | | US | 11368676 | B2 | 21 June 2022 |
| | | | | US | 2020-0336738 | A1 | 22 October 2020 |
| | | | | US | 2022-0272326 | A1 | 25 August 2022 |
| | | | | WO | 2019-143602 | A1 | 25 July 2019 |
| KR | 10-2020-0100656 | A | 26 August 2020 | US | 11234016 | B2 | 25 January 2022 |
| | | | | US | 2020-0314446 | A1 | 01 October 2020 |
| | | | | WO | 2019-143093 | A1 | 25 July 2019 |
| KR | 10-2021-0113188 | A | 15 September 2021 | CN | 113396591 | A | 14 September 2021 |
| | | | | EP | 3900347 | A2 | 27 October 2021 |
| | | | | US | 2022-0094940 | A1 | 24 March 2022 |
| | | | | WO | 2020-132556 | A2 | 25 June 2020 |
| | | | | WO | 2020-132556 | A3 | 30 July 2020 |